(19) Europäisches Patentamt
European Patent Office
Office européen des brevets

(11) **EP 4 748 634 A1**

(12) **EUROPEAN PATENT APPLICATION**
published in accordance with Art. 153(4) EPC

(43) Date of publication:
**27.05.2026 Bulletin 2026/22**

(21) Application number: **24863012.1**

(22) Date of filing: **23.07.2024**

(51) International Patent Classification (IPC):
**B60L 58/10** (2019.01)      **B60L 3/12** (2006.01)

(52) Cooperative Patent Classification (CPC):
**B60L 3/12; B60L 58/10;** Y02E 60/10

(86) International application number:
**PCT/KR2024/010594**

(87) International publication number:
**WO 2025/053430 (13.03.2025 Gazette 2025/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **04.09.2023 KR 20230116929**

(71) Applicant: **LG Energy Solution, Ltd.
Seoul 07335 (KR)**

(72) Inventors:
• **YOO, Ji Won
  Daejeon 34122 (KR)**
• **KIM, Kang San
  Daejeon 34122 (KR)**
• **KIM, Geum Bee
  Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **ANALYSIS APPARATUS AND OPERATING METHOD THEREOF**

(57)     According to an embodiment disclosed herein, an analysis device may include an information acquisition unit configured to acquire discharging data of a battery during a charging cycle, and a controller is configured to calculate a probability density function (PDF) of each of previous charging cycles based on discharging data corresponding to each charging cycle, calculate a reference usage pattern based on the probability density function of each of the previous charging cycles, calculate a traveling usage pattern based on discharging data acquired during a current charging cycle, and calculate usage change information related to the battery based on the reference usage pattern and the traveling usage pattern.

FIG.1

EP 4 748 634 A1

**Description**

**TECHNICAL FIELD**

CROSS-REFERENCE TO RELATED APPLICATION

This application claims priority to and the benefit of Korean Patent Application No. 10-2023-0116929 filed in the Korean Intellectual Property Office on September 4, 2023, the entire contents of which are incorporated herein by reference.

TECHNICAL FIELD

Embodiments disclosed herein relate to an analysis device and a method of operating the same.

**BACKGROUND ART**

Recently, research and development on secondary batteries has been actively conducted. Here, the secondary battery is a battery capable of charging and discharging and includes all recent lithium ion batteries such as conventional Ni/Cd batteries and Ni/MH batteries. Among the secondary batteries, the lithium-ion batteries have an advantage of having a much higher energy density than the conventional Ni/Cd batteries, the Ni/MH batteries, and the like. In addition, since the small and light-weight lithium ion batteries may be manufactured, the lithium ion batteries are used as a power source for mobile devices, and recently, the lithium ion batteries are attracting attention as a next-generation energy storage medium due to the expansion of the range of use to a power source for electric vehicles.

When such a battery is installed in a vehicle, there may be individual differences in the performance, lifetime, safety, and usage of the battery depending on the tendencies, habits, and patterns of vehicle drivers, and thus there is a need for a method of analyzing the driver's pattern and detecting a change in pattern. In particular, since it is difficult for the driver to detect a change in pattern, a change in battery usage accordingly, etc., there is a need for a method of determining and providing the same to the driver.

**DISCLOSURE**

**TECHNICAL PROBLEM**

Embodiments disclosed herein are directed to analyzing and providing a user's usage pattern from battery data.

In addition, embodiments disclosed herein are directed to analyzing and providing a change in pattern and a change in usage from a user's usage pattern.

The objects of the embodiments disclosed herein are not limited to the above-described objects, and other objects that are not described will be able to be clearly understood by those skilled in the art from the following descriptions.

**TECHNICAL SOLUTION**

According to an embodiment disclosed herein, an analysis device may include an information acquisition unit configured to acquire discharging data of a battery during a charging cycle, and a controller is configured to calculate a probability density function (PDF) of each of previous charging cycles based on discharging data corresponding to each charging cycle, calculate a reference usage pattern based on the probability density function of each of the previous charging cycles, calculate a traveling usage pattern based on discharging data acquired during a current charging cycle, and calculate usage change information related to the battery based on the reference usage pattern and the traveling usage pattern.

According to an embodiment, the controller may calculate the probability density function by applying kernel density estimation (KDE) to the discharging data corresponding to each of the previous charging cycles.

According to an embodiment, the controller may calculate the reference usage pattern by averaging the probability density functions of the previous charging cycles.

According to an embodiment, the controller may calculate the traveling usage pattern by applying kernel density estimation (KDE) to the discharging data acquired during the current charging cycle.

According to an embodiment, the controller may update the traveling usage pattern by reflecting discharging data for the corresponding traveling for each traveling included in the current charging cycle.

According to an embodiment, the controller may calculate a relative entropy for the reference usage pattern and the traveling usage pattern.

According to an embodiment, the controller may determine a tendency of the traveling usage pattern based on a change in relative entropy according to the update of the traveling usage pattern.

According to an embodiment, the controller may provide a notification to a user based on the tendency of the traveling usage pattern and the relative entropy.

According to an embodiment, the controller may calculate the usage change information based on an area difference of a graph that is shown by each of the reference usage pattern and the traveling usage pattern.

According to an embodiment, the controller may initialize the traveling usage pattern when the current charging cycle is ended.

According to an embodiment, the discharging data may include a depth of discharge (DOD) of the battery.

According to an embodiment disclosed herein, a method of operating an analysis device may include acquiring discharging data of a battery during a charging cycle, calculating a probability density function (PDF) of each of the previous charging cycles based on discharging data corresponding to each charging cycle, calculating a reference usage pattern based on the probability density function of each of the previous charging cycles, calculating a traveling usage pattern based on discharging data acquired during a current charging cycle, and calculating usage change information related to the battery based on the reference usage pattern and the traveling usage pattern.

According to an embodiment, the calculating of the probability density function may include calculating the probability density function by applying kernel density estimation (KDE) to the discharging data corresponding to each of the previous charging cycles.

According to an embodiment, the calculating of the usage pattern may include calculating the reference usage pattern by averaging the probability density functions of the previous charging cycles.

According to an embodiment, the calculating of the traveling usage pattern may include calculating the traveling usage pattern by applying kernel density estimation (KDE) to the discharging data acquired during the current charging cycle.

According to an embodiment, the calculating of the traveling usage pattern may include updating the traveling usage pattern by reflecting discharging data for the corresponding traveling for each traveling included in the current charging cycle.

According to an embodiment, the method may further include calculating a relative entropy for the reference usage pattern and the traveling usage pattern, and determining a tendency of the traveling usage pattern based on a change in relative entropy according to the update of the traveling usage pattern.

According to an embodiment, the calculating of the usage change information may include calculating the usage change information based on an area difference of a graph that is shown by each of the reference usage pattern and the traveling usage pattern.

ADVANTAGEOUS EFFECTS

The analysis device and the method of operating the same according to the embodiments disclosed herein can calculate the personalized reference usage pattern for the user.

In addition, the analysis device and the method of operating the same according to the embodiments disclosed herein can compare the reference usage pattern with the current traveling usage pattern and determine whether the current traveling usage pattern is out of the reference usage pattern.

In addition, the analysis device and the method of operating the same according to the embodiments disclosed herein can determine the change in batter usage, thereby effectively providing adjustment information such as a charging schedule.

In addition, various effects that may be directly or indirectly identified through the present document can be provided.

DESCRIPTION OF DRAWINGS

FIG. 1 is a block diagram showing a configuration of an analysis device according to one embodiment disclosed herein.

FIG. 2 is a view showing an example in which a reference usage pattern is calculated according to one embodiment disclosed herein.

FIGS. 3 and 4 are views showing an example of a traveling usage pattern according to one embodiment disclosed herein.

FIG. 5 is a view showing an example in which usage change information is calculated according to one embodiment disclosed herein.

FIG. 6 is a flowchart for describing a method of operating the analysis device according to one embodiment disclosed herein.

FIG. 7 is a flowchart for describing a method of operating an analysis device according to another embodiment disclosed herein.

FIG. 8 is a block diagram showing a hardware configuration of a computing system for performing a method of operating a data analysis device according to one embodiment disclosed herein.

**MODE FOR INVENTION**

Hereinafter, various embodiments of the present disclosure will be described with reference to the accompanying drawings. However, it should be understood that this is not intended to limit the present disclosure to specific embodiments and includes various modifications, equivalents, and/or alternatives of the embodiments of the present disclosure.

The singular form of a noun corresponding to an item in this document may include one item or a plurality of items unless the relevant context clearly dictates otherwise. In this document, each of phrases such as "A or B," "at least one of A and B," "at least one of A or B," "A, B, or C," "at least one of A, B, and C," and "at least one of A, B, or C" may include any one of the items listed together in the corresponding phrase among these phrases or all possible combinations thereof. The terms such as "first," "second," "first," or "second" may simply be used to distinguish the corresponding component from another and do not limit the corresponding components in another aspect (e.g., importance or order). When a certain (e.g., a first) component is described as being "connected," "coupled," or "joined or "coupled" or "connected" to another (e.g., a second) component with or without the terms "functionally" or "communicatively," this means that the certain component may be connected to another component directly (e.g., in a wired manner), in a wireless manner, or through a third component.

Each (e.g., a module or a program) of components described herein may include a single object or a plurality of objects. According to various embodiments, one or more among the above-described corresponding components may be omitted, or one or more other components or operations may be added. Alternatively or additionally, the plurality of components (e.g., modules or programs) may be integrated into one component. In this case, the integrated component may perform one or more functions of each of the plurality of components identically or similarly to those performed by the corresponding component of the plurality of components before the integration. According to various embodiments, operations performed by modules, programs, or other components may be executed sequentially, in parallel, repeatedly, or heuristically, or one or more of the operations may be executed in a different order or omitted, or one or more other operations may be added.

As used herein, the term "module," or "part" may include a unit implemented in hardware, software, or firmware and may be used interchangeably with terms such as logic, logic block, component, or circuit. The module may be an integrated part or a minimum unit of the parts or a portion thereof that performs one or more functions. For example, according to one embodiment, the module may be implemented in the form of an application-specific integrated circuit (ASIC).

Various embodiments of this document may be implemented as software (e.g., a program or application) including one or more commands stored in a storage medium (e.g., a memory) that may be read by a machine. For example, a processor of the device may fetch at least one command among one or more commands stored from a storage medium and execute the commands. This allows the device to be operated to perform at least one function according to the at least one fetched command. The one or more commands may include code generated by a compiler or code that may be executed by an interpreter. A device-readable storage medium may be provided in the form of a non-transitory storage medium. Here, "non-transitory storage medium" is a tangible device and only means not including a signal (e.g., electromagnetic waves), and this term does not distinguish between cases in which data is stored semi-permanently and temporarily in the storage medium.

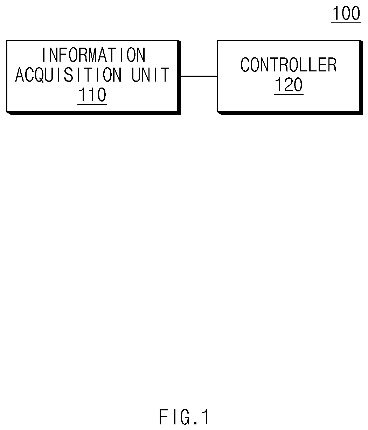

FIG. 1 is a block diagram showing a configuration of an analysis device according to one embodiment disclosed herein.

Referring to FIG. 1, an analysis device 100 may include an information acquisition unit 110 and a controller 120.

The analysis device 100 may identify a reference usage pattern of a battery of a user (e.g., a user of a vehicle when a battery is installed in a vehicle), compare a current battery usage pattern with the reference usage pattern, and provide a notification and usage change information to the user. The analysis device 100 may detect and compare the user's usage pattern with the reference usage pattern, and when the battery usage exceeds the reference usage pattern, notify the user of excess usage and provide information for adjusting the usage (e.g., adjusting a charging schedule).

The analysis device 100 may transmit usage change information, notification, etc. to an external electronic device, and the electronic device may be a user terminal carried by the user. The electronic device may include various types of devices capable of performing data communication. For example, an electronic device 30 may include portable devices such as smartphones or tablets, computer devices such as desktops or laptops, multimedia devices, cameras, wearable devices, virtual reality (VR) devices, etc., and is not limited to the above-described devices.

The analysis device 100 may be implemented as a separate physical device or server, and in some cases, implemented as a component of a battery management system (BMS) by being included in the BMS of a battery. As an example, the analysis device 100 may be implemented as an IC chip, a system-on-chip, etc. configured to perform a function of calculating a usage pattern and calculating usage change information in the BMS.

The information acquisition unit 110 may include a communication circuit for establishing a wired communication channel and/or a wireless communication channel between internal and external components the analysis device 100, such as a server, a vehicle, a BMS, and an on board device (OBD) and transmitting and receiving various pieces of data through the established communication channels.

The information acquisition unit 110 may acquire discharge data of the battery during a charging cycle. Here, the battery may be a battery mounted on a vehicle related to the user of the analysis device 100 and may be a battery pack or a battery module. The information acquisition unit 110 may acquire discharging data of the battery from, for example, a BMS provided on the battery pack, a vehicle BMS, an OBD, etc.

The information acquisition unit 110 may acquire discharging data during a plurality of charging cycles. Here, the charging cycle may be a section between charging and charging of the battery. For example, an $i^{th}$ (i is a natural number) charging cycle may be a section from a time point when $i^{th}$ charging ends to before $i+1^{th}$ charging starts.

The discharging data of the battery may include various pieces of information related to the discharging of the battery within the charging cycle. For example, the discharging data of the battery may be acquired each time the vehicle provided with the battery travels within the charging cycle. That is, the information acquisition unit 110 may acquire discharging data in a discharging process of the battery for each traveling within the charging cycle. For example, when there were n travelings in the $i^{th}$ charging cycle, the information acquisition unit 110 may acquire discharging data for each of the n travelings.

According to an embodiment, the discharging data of the battery may include a depth of discharge (DOD) of the battery. The information acquisition unit 110 may acquire various pieces of information related to the battery, such as a current, a voltage, a temperature, and a state of charge (SOC), in addition to the DOD of the battery.

The information acquisition unit 110 may acquire discharging data of the battery in the form of time series data, and the controller 120 may detect a discharging section of the battery from the time series data. For example, the controller 120 may detect the start and end of each traveling within the charging cycle. The controller 120 may detect the discharging section of the battery based on various pieces of information acquired from the information acquisition unit 110.

The controller 120 may calculate a probability density function of each previous charging cycle based on the discharging data corresponding to each charging cycle. The controller 120 may detect the start and end of charging from the discharging data acquired in time series and distinguish each charging cycle accordingly. Here, the previous cycle may be charging cycles that occurred before a current cycle, and the current cycle may be a current progress cycle before the last charging is ended and the next charging starts.

The controller 120 may calculate a probability density function (PDF) from discharging data corresponding to each charging cycle section in the distinguished charging cycle. For example, the controller 120 may calculate a probability density function for parameters (e.g., a DOD) of the discharging data in each charging cycle.

In an embodiment, the controller 120 may use the discharging data acquired for each discharging section of the battery or during traveling, and in this case, values of the discharging data used when calculating the reference usage pattern and the traveling usage pattern may be discontinuous. The controller 120 may calculate a probability density function for continuous values by applying various calculations, such as the kernel density estimation to be described below, even when the values of the discharging data used in this way are discontinuous. For example, the discharging data may include a DOD, and a value of the DOD consumed for each traveling may be discontinuous. In this case, the controller 120 may calculate the discontinuous data as a continuous probability density function for the DOD. Separately from the controller 120 using the discontinuous discharging data, it goes without saying that the information acquisition unit 110 may acquire the discharging data in a time series manner.

According to an embodiment, the controller 120 may calculate a probability density function by applying the kernel density estimation to the discharging data. The kernel density estimation is a technique used when calculating the distribution of data and may calculate the distribution of the data to be analyzed using a kernel expressed as a probability density. The controller 120 may calculate the distribution of the discharging data as a probability density function using the kernel density estimation. The controller 120 may calculate a continuous probability density function even when the discharging data is discontinuous.

The controller 120 may calculate the reference usage pattern based on the probability density function of each of the previous charging cycles. For example, the controller 120 may calculate the reference usage pattern from probability density functions of a preset number (e.g., 10) of previous charging cycles. In this case, the preset number of previous charging cycles may be determined in an order that is temporally close to the current charging cycle.

According to an embodiment, the controller 120 may calculate the reference usage pattern by averaging the probability density functions of the previous charging cycles. For example, the controller 120 may calculate the reference usage pattern by averaging the probability density functions of the preset number (e.g., 10) of previous charging cycles.

Therefore, the reference usage pattern can be expressed as a probability density for the parameter of the discharging data. The controller 120 may calculate the reference usage pattern by applying various calculations as well as an average of the probability density functions of the previous charging cycles.

The controller 120 may calculate the traveling usage pattern based on discharging data acquired during the current charging cycle. The controller 120 may calculate the traveling usage pattern by continuously reflecting discharging data acquired over time in the current charging cycle.

According to an embodiment, the controller 120 may detect a discharging section of a battery included in the current charging cycle. For example, the controller 120 may detect a traveling section in the current charging cycle and calculate the traveling usage pattern from the discharging data acquired for each traveling.

According to an embodiment, the controller 120 may calculate the traveling usage pattern when traveling (or a discharging section) occurs a preset number of times or more in the current charging cycle. When the number of travelings is less than the preset number of times in the current charging cycle, the controller 120 may not calculate the traveling usage pattern until sufficient discharging data is acquired as the accuracy of the traveling usage pattern may be lowered due to insufficient discharging data. The preset number of times may be set to, for example, 3 times, but is not limited thereto.

According to an embodiment, the controller 120 may calculate the traveling usage pattern by applying the kernel density estimation to the discharging data acquired during the current charging cycle. Therefore, the traveling usage pattern can be expressed as a probability density for the parameter of the discharging data.

According to an embodiment, the controller 120 may update the traveling usage pattern by reflecting the discharging data for each traveling included in the current charging cycle. For example, when new traveling is detected in the traveling usage pattern calculated up to a current time point, the controller 120 may update the traveling usage pattern by reflecting discharging data for the corresponding traveling to the previously calculated traveling usage pattern. As described above, the controller 120 may update the traveling usage pattern by accumulatively reflecting the discharging data in real time. In addition, the controller 120 may track a change in traveling usage pattern.

The controller 120 may calculate usage change information related to the battery based on the reference usage pattern and the traveling usage pattern. For example, the controller 120 may calculate usage change information from battery usage calculated from each of the reference usage pattern and the traveling usage pattern. The usage change information related to the battery may include usage exceeding or less than the reference usage pattern.

For example, the controller 120 may calculate usage change information according to [Equation 1] or [Equation 2] below. The controller 120 may apply [Equation 1] when a discharging data value is continuous and apply [Equation 2] when the discharging data value is discontinuous.

Usage change information = $\int$(*discharging data*)\* (*probability density$_{reference}$ of corresponding data value - probatility density$_{traveling}$ of corresponding data value*)   [Equation 1]

Usage change information = $\int$(*discharging data*) \* (*probability density$_{reference}$ of corresponding data value - probatility density$_{traveling}$ of corresponding data value*)   [Equation 2]

Here, the discharging data value is a value of the discharging data acquired in the current traveling cycle. For example, the discharging data value may be a discharging data value acquired for each traveling in the current traveling cycle. In addition, "probability *density$_{reference}$* of corresponding data value" and "probability density$_{traveling}$ of corresponding data value" denote probability densities of data values in the reference usage pattern and the traveling usage pattern, respectively.

According to an embodiment, the controller 120 may calculate the usage change information based on an area difference in a graph represented by each of the reference usage pattern and the traveling usage pattern. As described above, the reference usage pattern and the traveling usage pattern can be expressed as the probability density for the parameter of the discharging data, and the discharging data may include DoD. For example, the reference usage pattern and the traveling usage pattern can be expressed as a graph representing a probability distribution according to the DoD, and an area of each graph can represent the usage of the battery. Here, the area of the graph may be an area of a region formed by a graph, an x-axis, and a y-axis.

According to an embodiment, the controller 120 may calculate a relative entropy for the reference usage pattern and the traveling usage pattern. In an embodiment, the controller 120 may calculate the relative entropy by applying Kullback-Leibler divergence (KLD) to the reference usage pattern and the traveling usage pattern. The KLD is a method of calculating a difference between two probability distributions and may calculate the difference between the two probability distributions as a relative entropy. For example, the KLD can be represented by [Equation 3] below.

[Equation 3]

$$KL(p||q) = \int_{-\infty}^{\infty} p(\chi) \ln \frac{p(\chi)}{q(\chi)} d\chi$$

Here, p(x) and q(x) each denotes a probability distribution, and KL(p||q) denotes a difference between probability distribution q and probability distribution p, i.e., the relative entropy.

According to an embodiment, the controller 120 may determine the tendency of the traveling usage pattern based on a change in relative entropy according to the update of the traveling usage pattern. The controller 120 may update the traveling usage pattern by reflecting the discharging data of the corresponding traveling whenever new traveling occurs in the current charging cycle (i.e., whenever a new discharging section occurs). That is, the traveling usage pattern of the current charging cycle may change whenever new traveling occurs. In this case, the controller 120 may calculate the relative entropy for the reference usage pattern whenever the traveling usage pattern changes. The controller 120 may track the change in relative entropy calculated in this way.

The controller 120 may determine the tendency of the traveling usage pattern based on the change in relative entropy. Here, the tendency of the traveling usage pattern may include, for example, a tendency to approach the reference usage pattern and a tendency to move away from the reference usage pattern. For example, when the relative entropy continuously decreases according to the update of the traveling usage pattern, the controller 120 may determine that the tendency of the traveling usage pattern is the tendency to approach the reference usage pattern. When there is traveling in which the relative entropy increases according to the update of the traveling usage pattern, the controller 120 may determine that the tendency of the traveling usage pattern is the tendency to move away from the reference usage pattern.

According to an embodiment, the controller 120 may provide a notification to the user based on the tendency of the traveling usage pattern and the relative entropy. For example, when it is determined that the tendency of the traveling usage pattern is the tendency to move away from the reference usage pattern and there is traveling in which the relative entropy exceeds a threshold value, the controller 120 may provide a warning notification to the user. That is, the controller 120 may provide the warning notification to the user so that the user may be aware that the current battery usage is excessive. The above-described notification conditions are only illustrative, and the controller 120 may provide various notifications according to various conditions. As an example, when the tendency of the traveling usage pattern is the tendency to approach the reference usage pattern, the controller 120 may provide a notification indicating that the battery usage pattern is good.

For example, the controller 120 may provide a notification to a user terminal carried by the user, and the user may confirm the notification provided by the controller 120 and take an action to adjust the battery usage. In an embodiment, the controller 120 may additionally provide adjustment information (e.g., charging schedule information) related to the battery usage based on the tendency of the traveling usage pattern and the relative entropy.

According to an embodiment, the controller 120 may initialize the traveling usage pattern when the current charging cycle is ended. For example, the controller 120 may determine that the current charging cycle has been ended when detecting that charging starts in the current charging cycle. The controller 120 may use a final traveling usage pattern as a probability density function in the current cycle when the current charging cycle is ended. Then, the controller 120 may calculate a new traveling usage pattern when charging is ended and new discharge data is acquired.

As described above, the analysis device 100 may calculate a personalized reference usage pattern for the user. In addition, the analysis device 100 may compare the reference usage pattern with the current traveling usage pattern and determine whether the current traveling usage pattern is out of the reference usage pattern. In addition, the analysis device 100 may determine a change in battery usage and effectively provide adjustment information such as a charging schedule accordingly.

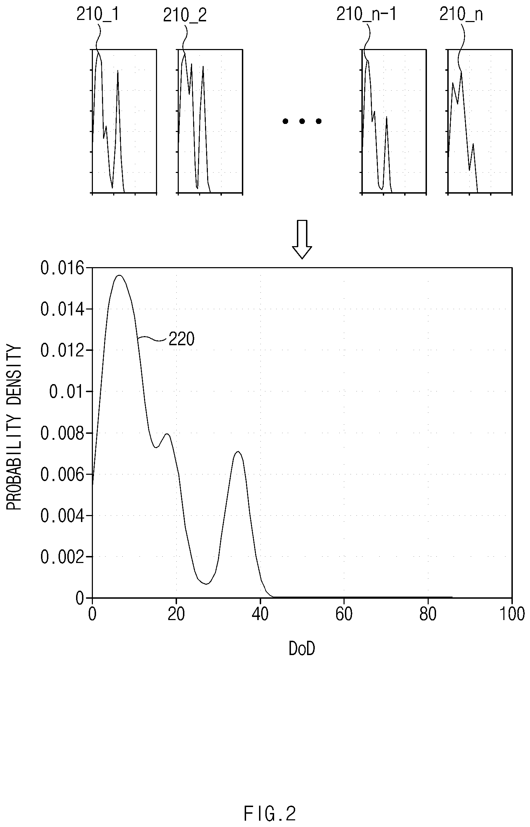

FIG. 2 is a view showing an example in which a reference usage pattern is calculated according to one embodiment disclosed herein.

Referring to FIG. 2, the controller 120 may calculate a reference usage pattern 220 from probability density functions 210_1, 210_2, ..., and 210_n of previous charging cycles. Fig. 2 shows an example of deriving a reference usage pattern from n probability density functions of the previous charging cycles, and each graph shows a probability density for the DOD as an example.

The probability density functions 210_1, 210_2, ..., and 210_n of the previous charging cycles and the reference usage pattern 220 can be expressed in the form of a graph showing the probability density for the parameter (e.g., a DOD) of the discharging data as shown in FIG. 2, and the x-axis represents the DOD and the y-axis represents the probability density. A DOD value may be a value between 0 and 100%.

In an embodiment, the controller 120 may calculate the reference usage pattern 220 by averaging the probability density functions 210_1, 210_2, ..., and 210_n of the previous charging cycles. That is, the reference usage pattern 220 may represent the average probability density of the DODs.

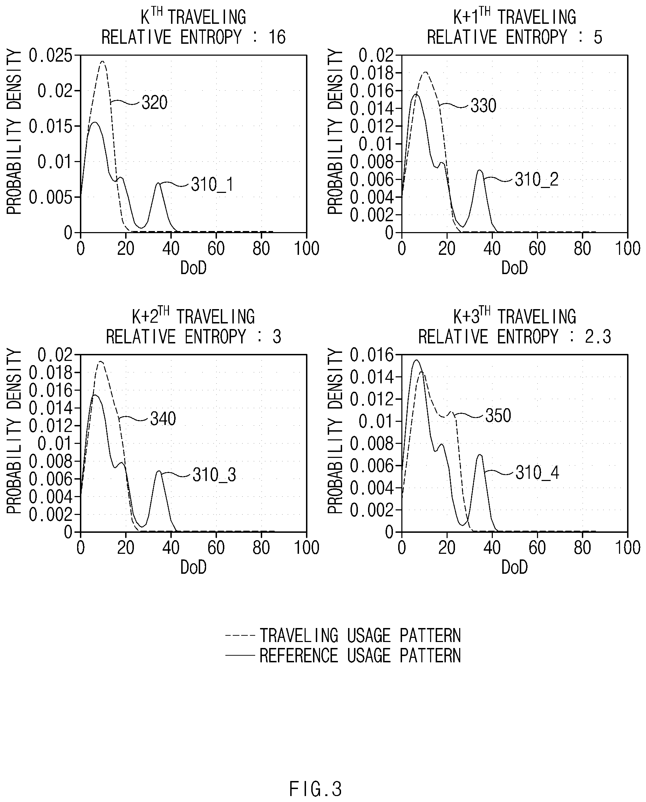

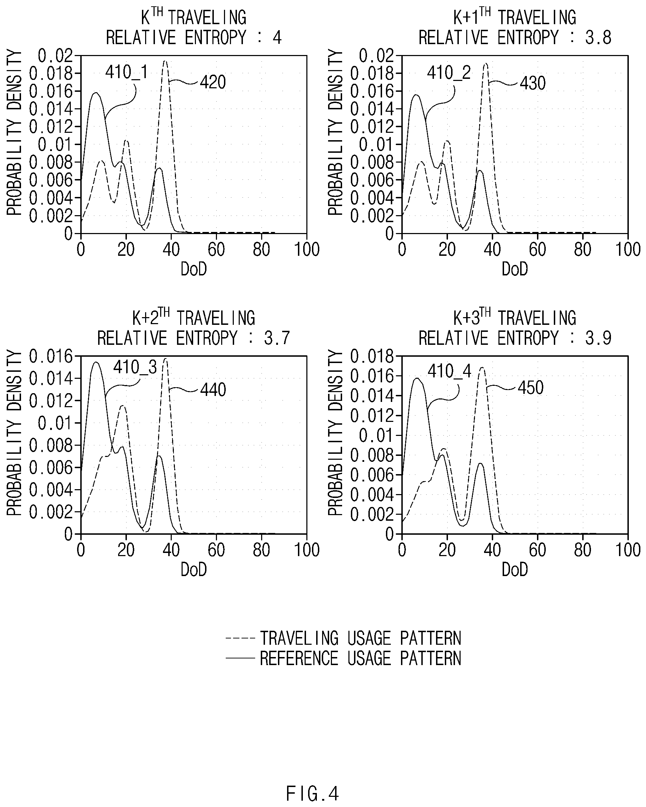

FIGS. 3 and 4 are views showing an example of a traveling usage pattern according to one embodiment disclosed herein. FIG. 3 is a view showing an example in which the traveling usage pattern shows the tendency to approach the reference usage pattern, and FIG. 4 is a view showing an example in which the traveling usage pattern shows the tendency to move away from the reference usage pattern.

First, referring to FIG. 3, traveling usage patterns 320, 330, 340, and 350 from $k^{th}$ (k is a natural number) traveling to $k+3^{th}$ traveling may be confirmed in the current charging cycle. As described above, the controller 120 may update the traveling usage pattern for each traveling.

In FIG. 3, it can be confirmed that the relative entropy continuously decreases as the number of travels increases (i.e., as the traveling usage pattern is updated). In this case, the controller 120 may determine that the traveling usage pattern shows the tendency to approach the reference usage pattern.

In FIG. 3, the reference usage patterns 310_1, 310_2, 310_3, and 310_4 use different symbols to be compared with the traveling usage patterns for each traveling, but may all be substantially the same. That is, in FIG. 3, a shape of the reference usage pattern may appear different because y-axis ranges are different from the $k^{th}$ traveling to the $k+3^{th}$ traveling, but it is only due to a difference in the y-axis range, and the reference usage patterns 310_1, 310_2, 310_3, and 310_4 all show the same pattern.

Next, referring to FIG. 4, it can be confirmed that there is traveling ($k+2^{th}$ traveling -> $k+3^{th}$ traveling) in which the relative entropy increases as the number of travelings increases (i.e., as the traveling usage pattern is updated). In this case, the controller 120 may determine that the traveling usage pattern shows the tendency to move away from the reference usage pattern.

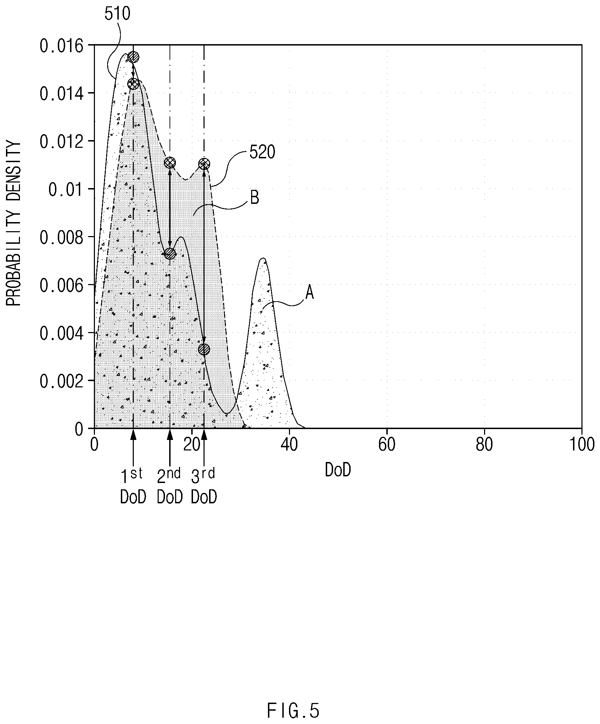

FIG. 5 is a view showing an example in which usage change information is calculated according to one embodiment disclosed herein.

Referring to FIG. 5, the controller 120 may calculate usage change information based on a reference usage pattern 510 and a traveling usage pattern 520.

In FIG. 5, an area of the graph indicated by the reference usage pattern 510 is A, and an area of the graph indicated by the traveling usage pattern 520 is B. When the value of the discharging data is continuous, the controller 120 may calculate the usage change information as A-B.

When the value of the discharging data is discontinuous, the controller 120 may calculate the battery usage by multiplying the value of the discharging data by the probability density of each data for each of the reference usage pattern 510 and the traveling usage pattern 520 and calculate usage change information from a difference in the battery usage.

For example, in a case where the values of the DOD are discontinuous as a $1^{st}$ DOD, a $2^{nd}$ DOD, and a $3^{rd}$ DOD as shown in FIG. 5, the controller 120 may calculate usage change information by multiplying the $1^{st}$ DOD value by a difference between the probability densities of the reference usage pattern 510 and the traveling usage pattern 520 for the $1^{st}$ DOD value and also applying the same to the $2^{nd}$ DOD and the $3^{rd}$ DOD in the same manner. In this case, the $1^{st}$ DOD, the $2^{nd}$ DOD, and the $3^{rd}$ DOD may be a DOD during the first traveling, the second traveling, and the third traveling, respectively, in the current traveling cycle in which the traveling usage pattern 520 has been calculated.

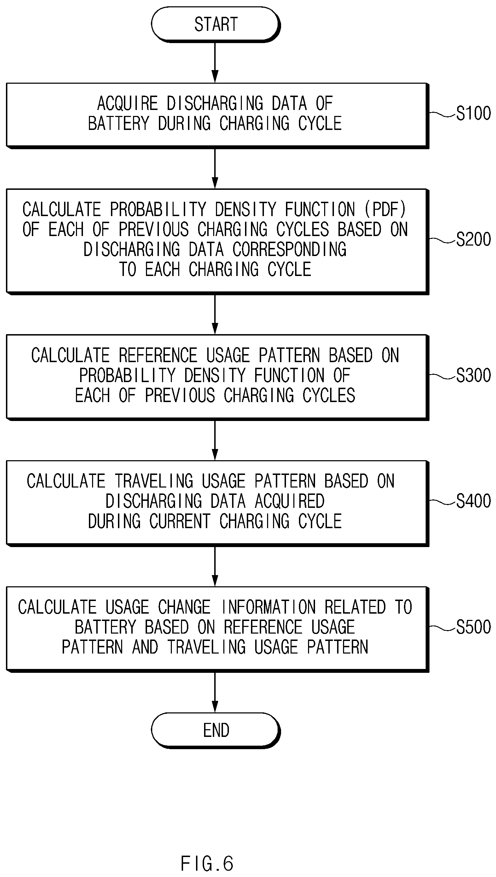

FIG. 6 is a flowchart for describing a method of operating the analysis device according to one embodiment disclosed herein.

Referring to FIG. 6, the method of operating the analysis device may include acquiring discharging data of a battery during a charging cycle (S100), calculating a probability density function (PDF) of each previous charging cycle based on discharging data corresponding to each charging cycle (S200), calculating a reference usage pattern based on a probability density function of each previous charging cycle (S300), calculating a traveling usage pattern based on discharging data acquired during a current charging cycle (S400), and calculating usage change information related to the battery based on the reference usage pattern and the traveling usage pattern (S500).

In operation S100, the information acquisition unit 110 may acquire discharging data of the battery during a charging cycle. For example, the information acquisition unit 110 may acquire discharging data for each traveling during each charging cycle. In an embodiment, the discharging data of the battery may include a depth of discharge (DOD) of the battery.

In operation S200, the controller 120 may calculate a probability density function of each previous charging cycle based on the discharging data corresponding to each charging cycle. In an embodiment, the controller 120 may calculate a probability density function by applying the kernel density estimation (KDE) to the discharging data corresponding to each charging cycle.

In operation S300, the controller 120 may calculate the reference usage pattern based on the probability density function of each previous charging cycle. In an embodiment, the controller 120 may calculate the reference usage pattern by averaging the probability density functions of the previous charging cycles.

In operation S400, the controller 120 may calculate the traveling usage pattern based on discharging data acquired during the current charging cycle. In an embodiment, the controller 120 may calculate the traveling usage pattern by applying the KDE to the discharging data acquired during the current charging cycle.

In operation S500, the controller 120 may calculate usage change information related to the battery based on the reference usage pattern and the traveling usage pattern. In an embodiment, the reference usage pattern and the traveling usage pattern can be expressed as a graph for a parameters and probability density of the discharging data, and in this case, the controller 120 may calculate usage change information from an area difference of the graph that is shown by each of the reference usage pattern and the traveling usage pattern.

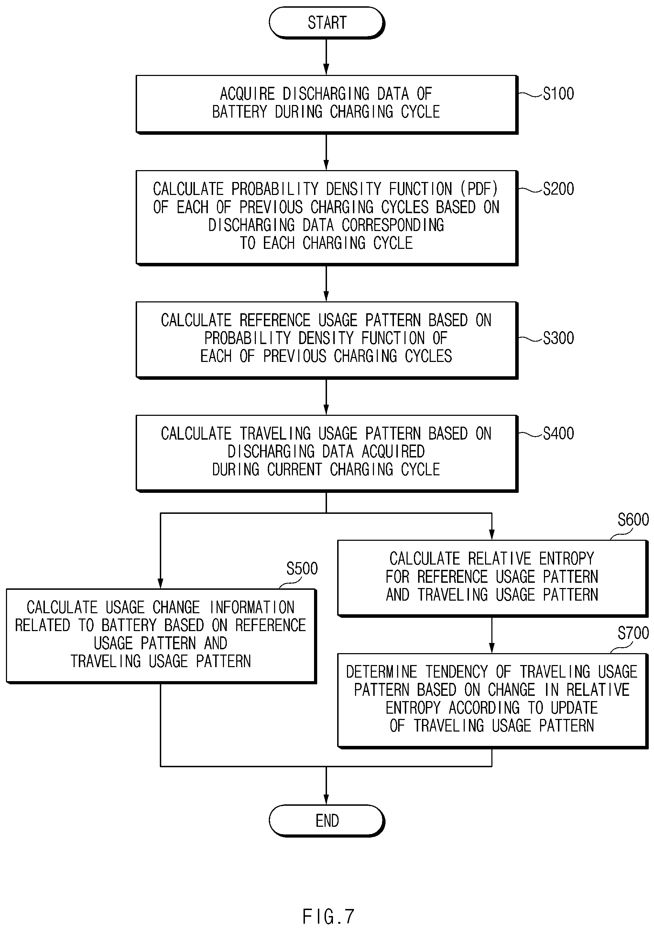

FIG. 7 is a flowchart for describing a method of operating an analysis device according to another embodiment disclosed herein.

As shown in FIG. 7, the method may further include calculating a relative entropy for the reference usage pattern and the traveling usage pattern (S600) and determining the tendency of the traveling usage pattern based on a change in relative entropy according to the update of the traveling usage pattern (S700) compared to FIG. 6.

In operation S600, the controller 120 may calculate the relative entropy for the reference usage pattern and the traveling usage pattern. In an embodiment, the controller 120 may calculate the relative entropy by applying Kullback-Leibler divergence (KLD) to the reference usage pattern and the traveling usage pattern.

In operation S700, the controller 120 may determine the tendency of the traveling usage pattern based on the change in relative entropy according to the update of the traveling usage pattern. For example, the tendency of the traveling usage pattern may include, for example, a tendency to approach the reference usage pattern and a tendency to move away from the reference usage pattern.

In FIG. 7, operations S600 and S700 are shown in parallel with S500, but each operation may be performed simultaneously or sequentially. That is, the controller 120 may update the traveling usage pattern for each traveling during the current traveling cycle and calculate usage change information from the updated traveling usage pattern and the reference usage pattern.

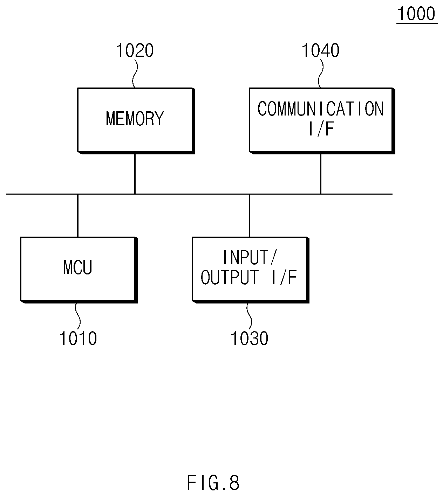

FIG. 8 is a block diagram showing a hardware configuration of a computing system for performing a method of operating a data analysis device according to one embodiment disclosed herein.

Referring to FIG. 8, a computing system 1000 according to one embodiment disclosed in this document may include a micro controller unit (MCU) 1010, a memory 1020, an input/output I/F 1030, and a communication I/F 1040.

The MCU 1010 may be a processor for executing various programs (e.g., a battery data acquisition program, a feature extraction program, a correlation coefficient matrix generation program, a pattern extraction program, and a classification program) stored in the memory 1020, processing various pieces of information including time series data of a dataset through these programs, and performing functions of the controller included in the above-described data analysis device shown in FIG. 2.

The memory 1020 may store various programs such as a battery data acquisition program, a feature extraction program, a correlation coefficient matrix generation program, a pattern extraction program, and a classification program. In addition, the memory 1020 may store various pieces of information including classification results of the dataset, abnormality occurrence histories, etc.

A plurality of memories 1020 may be provided if necessary. The memory 1020 may be a volatile memory or a non-volatile memory. As the memory 1020 of the volatile memory, a RAM, a DRAM, a SRAM, or the like can be used. As the memory 1020 of the non-volatile memory, a ROM, a PROM, an EAROM, an EPROM, an EEPROM, a flash memory, or the like can be used. Examples of the above-listed memories 1020 are merely illustrative and are not limited to these examples.

The input/output I/F 1030 may be an interface for connecting an input device (not shown), such as a keyboard, a mouse, or a touch panel, and an output device, such as a display (not shown) with the MCU 1010 and allowing the input and output devices and the MCU 1010 to transmit and receive data.

The communication I/F 1040 is a component capable of transmitting and receiving various data to and from the server and may be various devices capable of supporting wired or wireless communication. For example, the data analysis device may transmit and receive various pieces of information including abnormality occurrence histories in a dataset from an external server separately provided through the communication I/F 1040.

As described above, the computer program according to one embodiment disclosed herein may be implemented as a module for performing the functions shown in FIG. 2, for example, by being recorded in the memory 1020 and processed by the MCU 1010.

As described above, although all the components constituting the embodiments disclosed herein were described as being coupled or operated by being coupled, the embodiments disclosed herein are not necessarily limited to these embodiments. In other words, one or more of all the components may be operated by being selectively coupled without departing from the scope of the purpose of the embodiments disclosed herein.

In addition, the terms such as "comprise," "constitute," or "have" described above mean that the corresponding component may be inherent unless otherwise stated, and thus should be construed as further including another component rather than excluding another component. All terms including technical or scientific terms have the same meaning as commonly understood by those skilled in the art to which the embodiments disclosed herein pertain unless defined otherwise. Commonly used terms, such as terms defined in a dictionary, should be construed as consistent with the contextual meaning of the related art and are not construed in an ideal or excessively formal meaning unless explicitly defined herein.

The above description is merely the exemplary description of the technical spirit disclosed herein, and those skilled in the art to which embodiments disclosed herein pertain will be able to variously modify and change the present document without departing from the essential characteristics of the embodiments disclosed herein. Therefore, the embodiments disclosed herein are not intended to limit the technical spirit disclosed herein, but for illustrative purpose, and the scope of the technical spirit disclosed herein is not limited by these embodiments. The scope of the technical spirit disclosed herein should be construed by the appended claims, and all technical spirits within the equivalent range should be construed as being included in the scope of this document.

**Claims**

1. An analysis device comprising:

   an information acquisition unit configured to acquire discharging data of a battery during a charging cycle; and
   a controller is configured to:

   calculate a probability density function (PDF) of each of previous charging cycles based on discharging data corresponding to each charging cycle;
   calculate a reference usage pattern based on the probability density function of each of the previous charging cycles;
   calculate a traveling usage pattern based on discharging data acquired during a current charging cycle; and
   calculate usage change information related to the battery based on the reference usage pattern and the traveling usage pattern.

2. The analysis device of claim 1, wherein the controller calculates the probability density function by applying kernel density estimation (KDE) to the discharging data corresponding to each of the previous charging cycles.

3. The analysis device of claim 1, wherein the controller calculates the reference usage pattern by averaging the probability density functions of the previous charging cycles.

4. The analysis device of claim 1, wherein the controller calculates the traveling usage pattern by applying kernel density estimation (KDE) to the discharging data acquired during the current charging cycle.

5. The analysis device of claim 4, wherein the controller updates the traveling usage pattern by reflecting discharging data for the corresponding traveling for each traveling included in the current charging cycle.

6. The analysis device of claim 5, wherein the controller calculates a relative entropy for the reference usage pattern and the traveling usage pattern.

7. The analysis device of claim 6, wherein the controller determines a tendency of the traveling usage pattern based on a change in relative entropy according to the update of the traveling usage pattern.

8. The analysis device of claim 7, wherein the controller provides a notification to a user based on the tendency of the traveling usage pattern and the relative entropy.

9. The analysis device of claim 1, wherein the controller calculates the usage change information based on an area difference of a graph that is shown by each of the reference usage pattern and the traveling usage pattern.

10. The analysis device of claim 1, wherein the controller initializes the traveling usage pattern when the current charging cycle is ended.

11. The analysis device of claim 1,
    wherein the discharging data includes a depth of discharge (DOD) of the battery.

12. A method of operating an analysis device, comprising:

    acquiring discharging data of a battery during a charging cycle;

calculating a probability density function (PDF) of each of the previous charging cycles based on discharging data corresponding to each charging cycle;

calculating a reference usage pattern based on the probability density function of each of the previous charging cycles;

calculating a traveling usage pattern based on discharging data acquired during a current charging cycle; and

calculating usage change information related to the battery based on the reference usage pattern and the traveling usage pattern.

13. The method of claim 12, wherein the calculating of the probability density function includes calculating the probability density function by applying kernel density estimation (KDE) to the discharging data corresponding to each of the previous charging cycles.

14. The method of claim 12, wherein the calculating of the usage pattern includes calculating the reference usage pattern by averaging the probability density functions of the previous charging cycles.

15. The method of claim 12, wherein the calculating of the traveling usage pattern includes calculating the traveling usage pattern by applying kernel density estimation (KDE) to the discharging data acquired during the current charging cycle.

16. The method of claim 15, wherein the calculating of the traveling usage pattern includes updating the traveling usage pattern by reflecting discharging data for the corresponding traveling for each traveling included in the current charging cycle.

17. The method of claim 16, further comprising:

calculating a relative entropy for the reference usage pattern and the traveling usage pattern; and

determining a tendency of the traveling usage pattern based on a change in relative entropy according to the update of the traveling usage pattern.

18. The method of claim 12, wherein the calculating of the usage change information includes calculating the usage change information based on an area difference of a graph that is shown by each of the reference usage pattern and the traveling usage pattern.

100

```
┌─────────────────────────┐        ┌─────────────────────┐
│      INFORMATION        │        │     CONTROLLER      │
│  ACQUISITION UNIT       │────────│        120          │
│        110              │        │                     │
└─────────────────────────┘        └─────────────────────┘
```

FIG.1

FIG.2

FIG.3

FIG.4

FIG.5

START

ACQUIRE DISCHARGING DATA OF
BATTERY DURING CHARGING CYCLE — S100

CALCULATE PROBABILITY DENSITY FUNCTION (PDF)
OF EACH OF PREVIOUS CHARGING CYCLES BASED ON
DISCHARGING DATA CORRESPONDING
TO EACH CHARGING CYCLE — S200

CALCULATE REFERENCE USAGE PATTERN BASED ON
PROBABILITY DENSITY FUNCTION OF
EACH OF PREVIOUS CHARGING CYCLES — S300

CALCULATE TRAVELING USAGE PATTERN BASED ON
DISCHARGING DATA ACQUIRED
DURING CURRENT CHARGING CYCLE — S400

CALCULATE USAGE CHANGE INFORMATION RELATED TO
BATTERY BASED ON REFERENCE USAGE
PATTERN AND TRAVELING USAGE PATTERN — S500

END

FIG.6

START

ACQUIRE DISCHARGING DATA OF
BATTERY DURING CHARGING CYCLE — S100

CALCULATE PROBABILITY DENSITY FUNCTION (PDF)
OF EACH OF PREVIOUS CHARGING CYCLES BASED ON
DISCHARGING DATA CORRESPONDING
TO EACH CHARGING CYCLE — S200

CALCULATE REFERENCE USAGE PATTERN BASED ON
PROBABILITY DENSITY FUNCTION OF
EACH OF PREVIOUS CHARGING CYCLES — S300

CALCULATE TRAVELING USAGE PATTERN BASED ON
DISCHARGING DATA ACQUIRED
DURING CURRENT CHARGING CYCLE — S400

S600

CALCULATE RELATIVE ENTROPY
FOR REFERENCE USAGE PATTERN
AND TRAVELING USAGE PATTERN

S500

CALCULATE USAGE CHANGE INFORMATION
RELATED TO BATTERY BASED ON REFERENCE
USAGE PATTERN AND
TRAVELING USAGE PATTERN

S700

DETERMINE TENDENCY OF TRAVELING USAGE
PATTERN BASED ON CHANGE IN RELATIVE
ENTROPY ACCORDING TO UPDATE
OF TRAVELING USAGE PATTERN

END

FIG.7

FIG.8

**EP 4 748 634 A1**

## INTERNATIONAL SEARCH REPORT

| International application No. |
|---|
| **PCT/KR2024/010594** |

| | |
|---|---|
| **A.** | **CLASSIFICATION OF SUBJECT MATTER** |
| | **B60L 58/10**(2019.01)i; **B60L 3/12**(2006.01)i |

According to International Patent Classification (IPC) or to both national classification and IPC

| **B.** | **FIELDS SEARCHED** |
|---|---|

Minimum documentation searched (classification system followed by classification symbols)

B60L 58/10(2019.01); B60L 11/18(2006.01); G06Q 10/04(2012.01); G06Q 50/06(2012.01); H01M 10/44(2006.01); H01M 2/10(2006.01); H02J 7/00(2006.01); H02J 7/04(2006.01); H02J 7/10(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 방전(discharge), 충전(charge), 확률 밀도 함수(probability density function), 패턴 (pattern), 배터리(battery)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| Y | JP 2021-023043 A (SUBARU CORP.) 18 February 2021 (2021-02-18)<br>See paragraphs [0028]-[0049]; claim 1; and figures 3-4. | 1-18 |
| Y | KR 10-1405089 B1 (KOREA INSTITUTE OF ENERGY RESEARCH) 12 June 2014 (2014-06-12)<br>See paragraph [0057]; and claim 1. | 1-18 |
| Y | CN 115470985 A (INSTITUTE OF ELECTRICAL ENGINEERING, CHINESE ACADEMY OF SCIENCES) 13 December 2022 (2022-12-13)<br>See paragraphs [0005]-[0014]; and claim 2. | 2,4-8,13,15-17 |
| Y | JP 2013-102608 A (PANASONIC CORP.) 23 May 2013 (2013-05-23)<br>See paragraph [0033]. | 11 |
| A | KR 20-1998-0025763 U (KIA MOTORS CORPORATION) 05 August 1998 (1998-08-05)<br>See claims 1-3; and figures 3-4. | 1-18 |

| ☐ Further documents are listed in the continuation of Box C. | ☑ See patent family annex. |
|---|---|

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **24 October 2024** | **24 October 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/010594**

| Patent document cited in search report | | | Publication date (day/month/year) | Patent family member(s) | | | Publication date (day/month/year) |
|---|---|---|---|---|---|---|---|
| JP | 2021-023043 | A | 18 February 2021 | JP | 7280771 | B2 | 24 May 2023 |
| KR | 10-1405089 | B1 | 12 June 2014 | KR | 10-2013-0047902 | A | 09 May 2013 |
| CN | 115470985 | A | 13 December 2022 | WO | 2024-055526 | A1 | 21 March 2024 |
| JP | 2013-102608 | A | 23 May 2013 | JP | 5899450 | B2 | 06 April 2016 |
| | | | | WO | 2013-069284 | A1 | 16 May 2013 |
| KR | 20-1998-0025763 | U | 05 August 1998 | None | | | |

Form PCT/ISA/210 (patent family annex) (July 2022)

**EP 4 748 634 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230116929